# EUROPEAN PATENT SPECIFICATION

(11) **EP 3 110 091 B1**
(45) Date of publication and mention of the grant of the patent: **25.09.2019**
(21) Application number: 14882308.1
(22) Date of filing: 13.08.2014
(51) Int. Cl.: H04L 12/865, H04N 21/433, H04N 21/44, H04L 12/861

(54) **OUTPUT ARBITRATION CONTROL METHOD AND DEVICE**
AUSGANGSARBITRIERUNGSSTEUERUNGSVERFAHREN UND -VORRICHTUNG
PROCÉDÉ ET DISPOSITIF DE COMMANDE D'ARBITRAGE DE SORTIE

(30) Priority: 17.02.2014 CN 201410053654
(43) Date of publication of application: 28.12.2016
(73) Proprietor: Sanechips Technology Co., Ltd., Shenzhen, Guangdong 518085 (CN)
(72) Inventor: QIAO, Yanming, Shenzhen Guangdong 518057 (CN); LIU, Huarui, Shenzhen Guangdong 518057 (CN)
(74) Representative: Brunazzi, Stefano
(86) International application number: PCT/CN2014/084314
(87) International publication number: WO 2015/120701

(56) References cited:
- CN-A- 101 098 298
- CN-A- 101 136 854
- CN-A- 101 527 849
- CN-A- 101 821 973
- CN-A- 102 594 670
- CN-A- 102 665 104
- US-A- 5 231 633
- US-A1- 2002 101 820
- US-A1- 2007 211 280

## Description

### Technical Field

The present disclosure relates to the technical field of digital videos, and in particular to a method for controlling output arbitration and a device for controlling output arbitration.

### Background

During a process of transmitting a digital video stream, de-multiplexing Transport Stream (TS) by software has defects such as high occupancy rate of CPU resources and low execution efficiency when locating and finding specified data, thus, the TS is usually de-multiplexed by hardware.

Through de-multiplexing, data with different attributes are classified and stored in different cache queues. For example, Packetized Elementary Stream (PES) data is stored according to programs, section data is stored according to types, other data such as index data and self-adaption area data is stored according to application requirements; then the data in each cache queue is output, by various methods for controlling output arbitration, to an address where the software is able to access, for example, Double Data Rate (DDR) synchronous dynamic memory; what is directly processed by the software is the de-multiplexed data streams with known types, such as the PES data stream, the section data stream, the index data stream, the self-adaption data streams. This type of system architecture effectively improves the efficiency of de-multiplexing and video applications, and thus ensures the play smoothness of digital videos in a condition of high code rate and high-multiplexing.

Common methods for controlling output arbitration include: Strict Priority (SP), Round Robin (RR), Weighted Round Robin (WRR), Deficit Round Robin (DRR), Deficit Weighted Round Robin (DWRR) and other methods. Different method for controlling output arbitration may meet different design requirements; or, multiple methods for controlling output arbitration are used in one system design simultaneously; or, an existing method for controlling output arbitration is modified according to special requirements to execute a specified function. The process to implement an SP fixed-length scheduling algorithm in a related art includes the following steps:
Step 1: a priority (*P*(*i*),i=1,...n) is assigned to each data cache queue, where *P*(1) is the lowest scheduling priority and *P*(n) is the highest scheduling priority, each data cache queue corresponding to a different scheduling priority.
Step 2: in the cache data queues, the queue of which the length of cache data is greater than or equal to a fixed length applies for output arbitration.
Step 3: *i*=*n*, the scheduler judges whether the data cache queue with the highest scheduling priority *P*(*i*) applies for output arbitration; when a judgement result is yes, the scheduler schedules to output a fixed length of data in the data cache queue with the highest scheduling priority *P*(*i*), return to Step 2; otherwise, return to Step 4.
Step 4: *i*=*i*-1, the scheduler judges whether the data cache queue with the second highest scheduling priority *P*(*i-*1) applies for output arbitration; when a judgement result is yes, the scheduler schedules to output a fixed length of data in the data cache queue with the second highest scheduling priority *P*(*i-*1), return to Step 2; otherwise, return to Step 4.
Step 5: the scheduler judges whether the data cache queue currently applies for output arbitration is one with the lowest scheduling priority *P*(1); when a judgement result is yes, return to Step 2; otherwise, return to Step 4.

According to the SP fixed-length output scheduling algorithm, the data is assigned with different priorities and the data queue with the highest scheduling priority have the priority to be served, to ensure that the most important application is able to obtain the fastest data transmission.

During implementing the process of the related SP fixed-length output scheduling scheme, there are at least the following defects:
for PES data and section data obtained after de-multiplexing streaming data, which needs to be processed as a whole packet by software, when the SP fixed-length output scheduling scheme is directly adopted, if a cache queue has stored an End Of Packet (EOP) of the PES data or the section data but the length of the cache data stored in the cache queue has not reached the fixed length, no matter the cache queue has the highest scheduling priority or the lowest scheduling priority, cache queue will not apply for arbitration. In this condition, since the cache queue with the highest scheduling priority does not output the EOP of the PES data or the section data, the software is not able to acquire the latest data information corresponding to the PES data or the section data in time; the cache queue is able to apply for output arbitration unless the cache queue meets the fixed-length condition, and the software is able to process the entire packet unless the scheduler responds to the application and schedules to output. This defect will impact the timeless and completeness of processing the data stream and reduce the performance of system.

Therefore, for streaming data cache queues, the direct application of the SP fixed-length output scheduling algorithm merely meets the prioritization service of each queue, but meets the timeless service requirement of data.

The U.S. Patent Application US2002/101820 A1 describes a broadband system with traffic policing and transmission scheduling.

The U.S. Patent US 5,231,633 discloses a method for prioritizing, selectively discarding and multiplexing different traffic type fast packets, and associated queueing and dequeueing mechanisms.

The Chinese Patent Application CN 102 665 104 A describes a parallel multiplexing method for transport streams and a related device.

### Summary

In view of the above, the embodiments of the present disclosure aim at providing a method for controlling output arbitration and a device for controlling output arbitration, which not only can provide an output arbitration service for the fixed-length data, but also can provide an output arbitration service for the variable-length data which contains an End Of Packet (EOP) and of which a length is less than the fixed length.

In order to achieve the above object, the technical scheme of the present disclosure is as follows:
the embodiment of the present disclosure provides a method for controlling output arbitration, including: storing a received data stream in a corresponding data cache queue according to a de-multiplexing filter condition, and updating data address information of the corresponding data cache queue; when it is determined that a length of cache data in the data cache queue is greater than or equal to a fixed length, or when it is determined that the length of the cache data is less than the fixed length but the cache data contains an End Of Packet, EOP, controlling the data cache queue to apply for output arbitration and updating a state of the data cache queue; and outputting the cache data in the data cache queue which applies for the output arbitration according to a preset scheduling rule and the state of the data cache queue.

In an example embodiment, outputting the cache data in the data cache queue which applies for the output arbitration according to the preset scheduling rule and the state of the data cache queue comprises: setting a scheduling priority for each data cache queue, each data cache queue corresponding to a different scheduling priority; outputting the cache data in the data cache queue which applies for the output arbitration according to an order from a highest scheduling priority to a lowest scheduling priority and the state of the data cache queue.

In an example embodiment, outputting the cache data in the data cache queue which applies for the output arbitration according to the order from the highest scheduling priority to the lowest scheduling priority and the state of the data cache queue comprises: Step A: acquiring a data cache queue with the highest scheduling priority according to the order from the highest scheduling priority to the lowest scheduling priority; Step B: judging whether the currently acquired data cache queue applies for output arbitration according to the state of the data cache queue; when it is determined that the currently acquired data cache queue applies for the output arbitration, executing Step C; when it is determined that the currently acquired data cache queue does not apply for the output arbitration, executing Step D; Step C: outputting the cache data in the current data cache queue according to the data address information, then executing Step A; Step D: when it is determined that the currently acquired data cache queue is a data cache queue with the lowest scheduling priority, executing Step A; when it is determined that the currently acquired data cache queue is not the data cache queue with the lowest scheduling priority, acquiring a data cache queue with a scheduling priority next to the highest scheduling priority according to the order from the highest scheduling priority to the lowest scheduling priority, and executing Step B.

In an example embodiment, outputting the cache data in the current data cache queue according to the data address information comprises: when the length of the cache data is greater than or equal to the fixed length, outputting the fixed length of cache data in the data cache queue according to the data address information and preset fixed-length output information; when the length of the cache data is less than the fixed length but the cache data contains the EOP, determining an EOP address of the cache data according to the data address information and outputting, according to the EOP address, a corresponding variable length of cache data of which a length is less than the fixed length.

In an example embodiment, storing the received data stream in the corresponding data cache queue according to the de-multiplexing filter condition comprises: determining the data cache queue corresponding to the data stream according to the de-multiplexing filter condition; acquiring the current data address information of the data cache queue; storing the data stream in the corresponding data cache queue according to the acquired data address information.

According to another embodiment of the present disclosure, a device for controlling output arbitration is provided, including: a data enqueuing component, a queue managing component, an arbitration controlling component and an output scheduling component, wherein the data enqueuing component is configured to store a received data stream in a corresponding data cache queue according to a de-multiplexing filter condition; the queue managing component is configured to update data address information of the corresponding data cache queue; the arbitration controlling component is configured to control the data cache queue to apply for output arbitration and to update a state of the data cache queue when it is determined that a length of cache data in the data cache queue is greater than or equal to a fixed length, or it is determined that the cache data contains an End Of Packet, EOP; and the output scheduling component is configured to output the cache data in the data cache queue which applies for the output arbitration according to a preset scheduling rule and the state of the data cache queue.

In an example embodiment, the output scheduling component is configured to: set a scheduling priority for each data cache queue, each data cache queue corresponding to a different scheduling priority; output the cache data in the data cache queue which applies for the output arbitration according to an order from a highest scheduling priority to a lowest scheduling priority and the state of the data cache queue.

In an example embodiment, the output scheduling component is configured to: Step A: acquire a data cache queue with the highest scheduling priority according to the order from the highest scheduling priority to the lowest scheduling priority; Step B: judge whether the currently acquired data cache queue applies for output arbitration according to the state of the data cache queue; when it is determined that the currently acquired data cache queue applies for the output arbitration, execute Step C; when it is determined that the currently acquired data cache queue does not apply for the output arbitration, execute Step D; Step C: output the cache data in the current data cache queue according to the data address information, then execute Step A; Step D: when it is determined that the currently acquired data cache queue is a data cache queue with the lowest scheduling priority, execute Step A; when it is determined that the currently acquired data cache queue is not the data cache queue with the lowest scheduling priority, acquire a data cache queue with a scheduling priority next to the highest scheduling priority according to the order from the highest scheduling priority to the lowest scheduling priority, and execute Step B.

In an example embodiment, the output scheduling component is configured to: when the length of the cache data is greater than or equal to the fixed length, output the fixed length of cache data in the data cache queue according to the data address information and preset fixed-length output information; when the length of the cache data is less than the fixed length but the cache data contains the EOP, determine an EOP address of the cache data according to the data address information and output, according to the EOP address, a corresponding variable length of cache data of which a length is less than the fixed length.

In an example embodiment, the data enqueuing component is configured to: determine the data cache queue corresponding to the data stream according to the de-multiplexing filter condition; acquire the current data address information of the data cache queue; store the data stream in the corresponding data cache queue according to the acquired data address information.

With the method and device for controlling output arbitration provided in the embodiment of the present disclosure, a received data stream is stored in a corresponding data cache queue according to a de-multiplexing filter condition and data address information of the corresponding data cache queue is updated, the data cache queue is controlled to apply for output arbitration when it is determined that a length of cache data in the data cache queue is greater than or equal to a fixed length, or when it is determined that the length of the cache data is less than the fixed length but the cache data contains an EOP, and the cache data in the data cache queue which applies for output arbitration is output according to a preset scheduling rule and the state of the data cache queue, wherein the EOP might be the EOP of PES or Section data. Therefore, the present disclosure not only can provide an output arbitration service for the fixed-length data, but also can locate the EOP of the PES data or the Section data through a hardware finding and locating method to provide an output arbitration service for the variable-length PES or Section data which contains an EOP and of which the length is less than the fixed-length, and at same time can meet the timeless service requirement of data.

### Brief Description of the Drawings

Fig. 1 is a flowchart of a method for controlling output arbitration according to the embodiment of the present disclosure;
Fig. 2 is a flowchart of a method for outputting cache data based on an SP algorithm according to the embodiment of the present disclosure; and
Fig. 3 is a structure diagram of a device for controlling output arbitration according to the embodiment of the present disclosure.

### Detailed Description of the Embodiments

In the embodiment of the present disclosure, a received data stream is stored in a corresponding data cache queue according to a de-multiplexing filter condition and data address information of the corresponding data cache queue is updated, the data cache queue is controlled to apply for output arbitration when it is determined that a length of cache data in the data cache queue is greater than or equal to a fixed length, or when it is determined that the length of the cache data is less than the fixed length but the cache data contains an EOP, and the cache data in the data cache queue which applies for output arbitration is output according to a preset scheduling rule and the state of the data cache queue. Therefore, the present disclosure not only can provide an output arbitration service for the fixed-length data, but also can provide an output arbitration service for the variable-length data which contains an EOP and of which a length is less than the fixed length.

Here, carrying an EOP refers to carrying the EOP of the PES data or Section data.

The specific embodiments of the present disclosure are further illustrated below in conjunction with accompanying drawings.

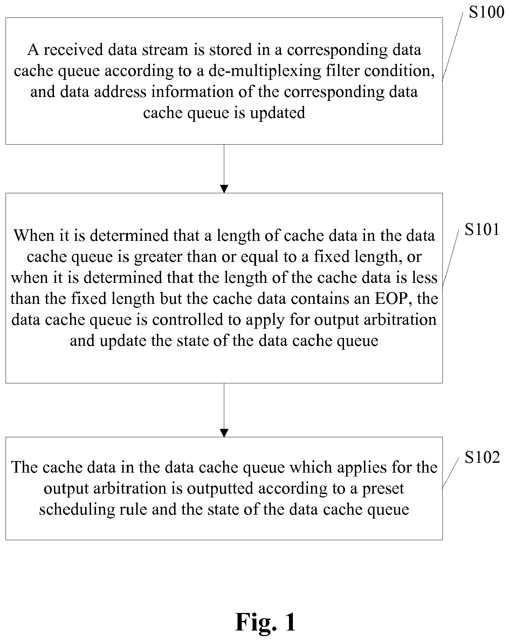

The embodiment of the present disclosure provides a method for controlling output arbitration, which as shown in Fig. 1 includes:
S100: a received data stream is stored in a corresponding data cache queue according to a de-multiplexing filter condition, and data address information of the corresponding data cache queue is updated.

Specifically, first, a data cache queue corresponding to the data stream is determined according to the de-multiplexing filter condition; then, the current data address information of the data cache queue is acquired; and finally, the data stream is stored in the corresponding data cache queue according to the acquired data address information, and the data address information of the corresponding data cache queue is updated. Here, the de-multiplexing operation refers to the de-multiplexing operation realized through hardware, that is, hardware de-multiplexing, so as to solve the problems of high occupancy rate of CPU resources and low execution efficiency of specific bytes caused by software de-multiplexing.

Here, a corresponding data cache queue is set for different data types in advance; the de-multiplexing filter condition may be set to store PES data in a corresponding data cache queue according to program types in advance, or to store Section data in a corresponding data cache queue according to data types, or to store other data such as index data and self-adaption area data in a corresponding data cache queue according to application requirements; each type of data corresponds to a fixed data cache queue; through the de-multiplex filter condition, the data cache queues corresponding to different types of data is determined, and each type of data is taken as cache data to store in the corresponding data cache queue.

Here, the preset data address information includes data read/write pointer information and other information; when data is enqueued, a write starting address is indicated for each data cache queue according to a write pointer and the data is stored in a storage unit starting with the write starting address, and then the received data stream is stored in a corresponding data cache queue according to the data address information; when data is dequeued, a read starting address is indicated for each data cache queue according to a read pointer and the data in the storage unit starting with the read starting address is output; then, the data address information of the data cache queue (that is, the data read/write pointer of the data cache queue) is updated according to the data enqueuing and data dequeuing condition of the data cache queue, so as to complete the management of the data cache queue by monitoring the data enqueuing and data dequeuing condition in real time.

Here, data enqueuing and data dequeuing are two independent processes; while cache data is output from the data cache queue, there might be data entering the queue cache queue. S101: when it is determined that a length of cache data in the data cache queue is greater than or equal to a fixed length, or when it is determined that the length of the cache data is less than the fixed length but the cache data contains an EOP, the data cache queue is controlled to apply for output arbitration and update the state of the data cache queue.

Here, carrying an EOP refers to carrying the EOP of PES or Section data. The initial state of all data cache queues is set to a state of not applying for output arbitration in advance; when it is determined that a length of cache data in the data cache queue is greater than or equal to a fixed length, or when it is determined that the length of the cache data is less than the fixed length but the cache data contains an EOP, the data cache queue applies for output arbitration and the state of the data cache queue is updated to apply for output arbitration.

Generally, the length of a PES or Section packet is thousand or ten-thousand times the fixed output length of the data cache queue; the PES or Section data enters the corresponding data cache queue one after another according to the de-multiplexing filter condition; when the length of the cache data in the data cache queue is greater than or equal to a fixed length, that is, when the fixed-length output condition is met, the data cache queue is controlled to apply for output arbitration, and the cache data in the data cache queue which applies for output arbitration is output according to a preset scheduling rule and the state of the data cache queue; since the length of the PES or Section packet is very long, all the previous data entering the data cache queue one after another is output by arbitration when meeting the fixed-length output condition; however, since the data finally entering the data cache queue probably might not meet the fixed-length output condition, in order to ensure the timeliness and completeness of data stream processing and to make following software process in time, it is needed to contain an EOP in the PES or Section packet; in this way, even if the data finally entering the data cache queue does not meet the fixed-length output condition, since the packet contains an EOP, the EOP is able to be located by a hardware finding and locating method, then a variable-length of PES or Section data is output according to the address indicated by the EOP, thus, the entire PES or Section packet is output, meeting the timeliness and completeness of data stream processing.

S102: the cache data in the data cache queue which applies for the output arbitration is outputted according to a preset scheduling rule and the state of the data cache queue.

Here, different scheduling rules may be set to implement the output of the cache data in the data cache queue which applies for output arbitration; specifically, the cache data in the data cache queue which applies for output arbitration is outputted based on an SP algorithm, which includes the following process:
S200: scheduling priorities (*P*(*1*)... *P*(*n*)) for all data cache queues are set, where *P*(1) is the lowest scheduling priority and *P*(n) is the highest scheduling priority, each data cache queue corresponding to a different scheduling priority.
S201: the data cache queue with the highest scheduling priority is acquired according to the order (*P*(*n*)*...P*(*1*)) from the highest scheduling priority to the lowest scheduling priority.
S202: whether the currently acquired data cache queue applies for output arbitration is judged according to the state information of the data cache queue; when it is determined that the currently acquired data cache queue applies for the output arbitration, S203 is executed; when it is determined that the currently acquired data cache queue does not apply for the output arbitration, S204 is executed.
S203: the cache data in the current data cache queue is outputted according to the data address information, then S201 is executed.
S204: when it is determined that the currently acquired data cache queue is a data cache queue with the lowest scheduling priority *P*(1), S201 is executed; when it is determined that the currently acquired data cache queue is not the data cache queue with the lowest scheduling priority *P*(1), S205 is executed.
S205: the data cache queue with the scheduling priority *P*(n-1) next to the highest scheduling priority is acquired according to the order (*P*(*n*)... *P*(*1*)) from the highest scheduling priority to the lowest scheduling priority, and S202 is executed.

It should be noted that the state of the data cache queue is updated in real time according to the condition in that the data cache queue applies for output arbitration; when S202 is executed, it is re-determined whether the currently acquired data cache queue applies for output arbitration according to the updated state of the data cache queue.

Here, since data enqueuing and data dequeuing are two independent processes; while cache data is output from a data cache queue, there might be data entering the queue cache queue. Therefore, after the cache data in the data cache queue which applies for output arbitration is output according to the preset scheduling rule and the state of the data cache queue, the data cache queue probably still has cached a data of which the length is greater than or equal to a fixed length, or of which a length is less than the fixed length but which contains an EOP, then the data cache queue continues to be controlled to apply for output arbitration; when the length of the cache data in the data cache queue in the following process is less than the fixed length and the data does not contain the EOP, the state of the data cache queue is updated to a state of not applying for output arbitration.

In the embodiment of the present disclosure, the scheduling rule based on the SP algorithm can improve the de-multiplexing efficiency of data stream, meet timeliness service requirements, ensure the real-time capability of the data of following system modules and improve the entire system performance.

In S203, the cache data in the current data cache queue is outputted according to the data address information, and the process is specifically realized by the following process:
when the length of the cache data is greater than or equal to the fixed length, the fixed length of cache data in the data cache queue is outputted according to the data address information and preset fixed-length output information;
when the length of the cache data is less than the fixed length but the cache data contains the EOP, an EOP address of the cache data is determined according to the data address information and a corresponding variable length of cache data of which a length is less than the fixed length, is outputted according to the EOP address,.

Specifically, the EOP refers to the EOP of the PES or Section data; when it is determined that the length of the PES or Section data is less than the fixed length but the data contains an EOP, the EOP address of the PES or Section data is determined according to the PES or Section data address, and a corresponding variable length of cache data of which a length is less than the fixed length, is output according to the EOP address.

When the length of the PES or Section data or other types of data is greater than or equal to the fixed length, the fixed length of cache data in the data cache queue is outputted according to the data address information and preset fixed-length output information;
In S203, the EOP can be located by a hardware finding and locating method, then the address indicated by the EOP is determined according to the data address information, and then a variable-length cache data is output according to the address of the EOP, thereby improving the execution efficiency of system.

Specifically, the EOP is located through the following methods: when the PES or Section data is enqueued, the Start Of Packet (SOP) of the PES or Section packet is located according to a Payload Unit Star Indicator (PUSI), so as to acquire the EOP of the last PES or Section packet; the EOP and the PES or Section data are enqueued simultaneously.

The embodiment of the present disclosure not only can provide an output arbitration service for the fixed-length data, but also can locate the EOP through a hardware finding and locating method to provide an output arbitration service for the variable-length PES or Section data which contains an EOP and of which the length is less than the fixed-length, thereby guaranteeing the completeness of the PES or Section data, meeting the timeless service requirement and enhancing the entire system performance.

Based on the above method, the embodiment of the present disclosure further provides a device for controlling output arbitration, of which the principle to solve problems is similar to the problems of the method; therefore, the implementation of the device can refer to the implementation of the method and no further description is provided for repeated part.

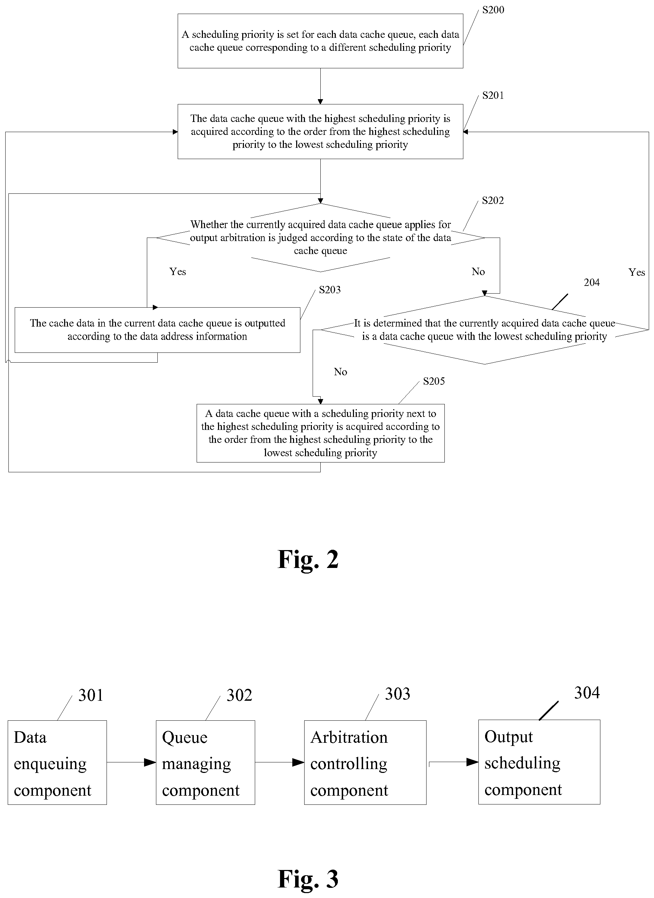

As shown in Fig. 3, the device for controlling output arbitration provided by the embodiment of the present disclosure includes: a data enqueuing component 301, a queue managing component 302, an arbitration controlling component 303 and an output scheduling component 304, wherein
the data enqueuing component 301 is configured to store a received data stream in a corresponding data cache queue according to a de-multiplexing filter condition;
the queue managing component 302 is configured to update data address information of the corresponding data cache queue;
the arbitration controlling component 303 is configured to control the data cache queue to apply for output arbitration and to update a state of the data cache queue when it is determined that a length of cache data in the data cache queue is greater than or equal to a fixed length, or when it is determined that the length of the cache data is less than the fixed length but the cache data contains an EOP; and
the output scheduling component 304 is configured to output the cache data in the data cache queue which applies for the output arbitration according to a preset scheduling rule and the state of the data cache queue.

The division of the function components above is an example implementation given by the embodiment of the present disclosure and does not form a limitation to the present disclosure.

Here, carrying an EOP refers to carrying the EOP of PES or Section data.

During specific implementation, the output scheduling component 304 is further configured to:
set a scheduling priority for each data cache queue, each data cache queue corresponding to a different scheduling priority;
output the cache data in the data cache queue which applies for the output arbitration according to an order from a highest scheduling priority to a lowest scheduling priority and the state of the data cache queue.

During specific implementation, the output scheduling component 304 is further configured to:
Step A: acquire a data cache queue with the highest scheduling priority according to the order from the highest scheduling priority to the lowest scheduling priority;
Step B: judge whether the currently acquired data cache queue applies for output arbitration according to the state of the data cache queue; when it is determined that the currently acquired data cache queue applies for the output arbitration, execute Step C; when it is determined that the currently acquired data cache queue does not apply for the output arbitration, execute Step D;
Step C: output the cache data in the current data cache queue according to the data address information, then execute Step A;
Step D: when it is determined that the currently acquired data cache queue is a data cache queue with the lowest scheduling priority, execute Step A; when it is determined that the currently acquired data cache queue is not the data cache queue with the lowest scheduling priority, acquire a data cache queue with a scheduling priority next to the highest scheduling priority according to the order from the highest scheduling priority to the lowest scheduling priority, and execute Step B.

During specific implementation, the output scheduling component 304 is further configured to:
when the length of the cache data is greater than or equal to the fixed length, output the fixed length of cache data in the data cache queue according to the data address information and preset fixed-length output information;
when the length of the cache data is less than the fixed length but the cache data contains the EOP, determine an EOP address of the cache data according to the data address information and output, according to the EOP address, a corresponding variable length of cache data of which a length is less than the fixed length.

During specific implementation, the data enqueuing component 301 is further configured to:
determine the data cache queue corresponding to the data stream according to the de-multiplexing filter condition;
acquire the current data address information of the data cache queue;
store the data stream in the corresponding data cache queue according to the acquired data address information.

Here, de-multiplexing filtering may be realized by a de-multiplexing Packet ID (PID) filter in actual applications; each de-multiplexing PID filter corresponds to a fixed data cache queue; when the data enqueuing component 301 receives a data stream filtered by the de-multiplexing PID filter, the data enqueuing component 301 determines the corresponding data cache queue according to the de-multiplexing PID filter and acquires the data address information of the data cache queue from the queue managing component 302, and stores the data stream in the corresponding data cache queue according to the data address information.

Here, the queue managing component 302 maintains a fixed data cache queue for each de-multiplexing PID filter; the data attribute of any one data cache queue is determined by the filter information set by the corresponding de-multiplexing PID filter.

During actual applications, the data enqueuing component 301, the queue managing component 302, the arbitration controlling component 303 and the output scheduling component 304 may be realized by a chip logic gate circuit or a field-programmable gate array (FPGA) located in the output arbitration control device.

Although the above content has described the example embodiment of the present disclosure, those skilled in the art can make other changes and modifications to these embodiments once learning the basic creative concepts. Therefore, claims appended below are intended to include example embodiments and all changes and modifications included in the scope of the present disclosure.

Obviously, if modifications and variations of the present disclosure are included in the scope of the claims and equivalent technologies of the present disclosure, the present disclosure shall cover these changes and variations.

### Industrial Applicability

To sum up, through the above embodiments and example implementations, the present disclosure not only can provide an output arbitration service for the fixed-length data, but also can locate the EOP of PES or Section data through a hardware finding and locating method to provide an output arbitration service for the variable-length PES or Section data which contains an EOP and of which the length is less than the fixed-length, and at same time can meet the timeless service requirement of data.

## Claims

1. A method for controlling output arbitration, comprising:
storing a received data stream in a corresponding data cache queue according to a de-multiplexing filter condition, and updating data address information of the corresponding data cache queue (S100);
when it is determined that a length of cache data in the data cache queue is greater than or equal to a fixed length, or when it is determined that the length of the cache data is less than the fixed length but the cache data contains an End Of Packet, EOP, controlling the data cache queue to apply for output arbitration and updating a state of the data cache queue (S101), which is related to the length of the data cache queue; and
outputting the cache data in the data cache queue which applies for the output arbitration according to a preset scheduling rule and the state of the data cache queue (S102).

2. The method as claimed in claim 1, wherein outputting the cache data in the data cache queue which applies for the output arbitration according to the preset scheduling rule and the state of the data cache queue comprises:
setting a scheduling priority for each data cache queue, each data cache queue corresponding to a different scheduling priority;
outputting the cache data in the data cache queue which applies for the output arbitration according to an order from a highest scheduling priority to a lowest scheduling priority and the state of the data cache queue.

3. The method as claimed in claim 2, wherein outputting the cache data in the data cache queue which applies for the output arbitration according to the order from the highest scheduling priority to the lowest scheduling priority and the state of the data cache queue comprises:
Step A: acquiring a data cache queue with the highest scheduling priority according to the order from the highest scheduling priority to the lowest scheduling priority;
Step B: judging whether the currently acquired data cache queue applies for output arbitration according to the state of the data cache queue; when it is determined that the currently acquired data cache queue applies for the output arbitration, executing Step C; when it is determined that the currently acquired data cache queue does not apply for the output arbitration, executing Step D;
Step C: outputting the cache data in the current data cache queue according to the data address information, then executing Step A;
Step D: when it is determined that the currently acquired data cache queue is a data cache queue with the lowest scheduling priority, executing Step A; when it is determined that the currently acquired data cache queue is not the data cache queue with the lowest scheduling priority, acquiring a data cache queue with a scheduling priority next to the highest scheduling priority according to the order from the highest scheduling priority to the lowest scheduling priority, and executing Step B.

4. The method as claimed in claim 3, wherein outputting the cache data in the current data cache queue according to the data address information comprises:
when the length of the cache data is greater than or equal to the fixed length, outputting the fixed length of cache data in the data cache queue according to the data address information and preset fixed-length output information;
when the length of the cache data is less than the fixed length but the cache data contains the EOP, determining an EOP address of the cache data according to the data address information and outputting, according to the EOP address, a corresponding variable length of cache data of which a length is less than the fixed length.

5. The method as claimed in any one of claims 1 to 4, wherein storing the received data stream in the corresponding data cache queue according to the de-multiplexing filter condition comprises:
determining the data cache queue corresponding to the data stream according to the de-multiplexing filter condition;
acquiring the current data address information of the data cache queue;
storing the data stream in the corresponding data cache queue according to the acquired data address information.

6. A device for controlling output arbitration, comprising: a data enqueuing component (301), a queue managing component (302), an arbitration controlling component (303) and an output scheduling component (304), wherein
the data enqueuing component (301) is configured to store a received data stream in a corresponding data cache queue according to a de-multiplexing filter condition;
the queue managing component (302) is configured to update data address information of the corresponding data cache queue;
the arbitration controlling component (303) is configured to control the data cache queue to apply for output arbitration and to update a state of the data cache queue, which is related to the length of the data cache queue, when it is determined that a length of cache data in the data cache queue is greater than or equal to a fixed length, or it is determined that the cache data contains an End Of Packet, EOP; and
the output scheduling component (304) is configured to output the cache data in the data cache queue which applies for the output arbitration according to a preset scheduling rule and the state of the data cache queue.

7. The device as claimed in claim 6, wherein the output scheduling component (304) is configured to:
set a scheduling priority for each data cache queue, each data cache queue corresponding to a different scheduling priority;
output the cache data in the data cache queue which applies for the output arbitration according to an order from a highest scheduling priority to a lowest scheduling priority and the state of the data cache queue.

8. The device as claimed in claim 7, wherein the output scheduling component (304) is configured to:
Step A: acquire a data cache queue with the highest scheduling priority according to the order from the highest scheduling priority to the lowest scheduling priority;
Step B: judge whether the currently acquired data cache queue applies for output arbitration according to the state of the data cache queue; when it is determined that the currently acquired data cache queue applies for the output arbitration, execute Step C; when it is determined that the currently acquired data cache queue does not apply for the output arbitration, execute Step D;
Step C: output the cache data in the current data cache queue according to the data address information, then execute Step A;
Step D: when it is determined that the currently acquired data cache queue is a data cache queue with the lowest scheduling priority, execute Step A; when it is determined that the currently acquired data cache queue is not the data cache queue with the lowest scheduling priority, acquire a data cache queue with a scheduling priority next to the highest scheduling priority according to the order from the highest scheduling priority to the lowest scheduling priority, and execute Step B.

9. The device as claimed in claim 8, wherein the output scheduling component (304) is configured to:
when the length of the cache data is greater than or equal to the fixed length, output the fixed length of cache data in the data cache queue according to the data address information and preset fixed-length output information;
when the length of the cache data is less than the fixed length but the cache data contains the EOP, determine an EOP address of the cache data according to the data address information and output, according to the EOP address, a corresponding variable length of cache data of which a length is less than the fixed length.

10. The device as claimed in any one of claims 6 to 9, wherein the data enqueuing component (301) is configured to:
determine the data cache queue corresponding to the data stream according to the de-multiplexing filter condition;
acquire the current data address information of the data cache queue;
store the data stream in the corresponding data cache queue according to the acquired data address information.

## Patentansprüche

1. Verfahren zum Steuern einer Ausgangsarbitrierung, umfassend:
Speichern eines empfangenen Datenstroms in einer entsprechenden Datenzwischenspeicherwarteschlange gemäß einer Demultiplex-Filterbedingung und Aktualisieren von Datenadressinformationen der entsprechenden Datenzwischenspeicherwarteschlange (S100);
wenn festgestellt wird, dass eine Länge von Zwischenspeicherdaten in der Datenzwischenspeicherwarteschlange größer oder gleich einer festen Länge ist, oder wenn festgestellt wird, dass die Länge der Zwischenspeicherdaten kleiner als die feste Länge ist, die Zwischenspeicherdaten jedoch ein Paketende, End Of Packet, EOP, enthält, Steuern der Datenzwischenspeicherwarteschlange, um eine Ausgangsarbitrierung zu beantragen, und Aktualisieren eines Zustands der Datenzwischenspeicherwarteschlange (S101), der mit der Länge der Datenzwischenspeicherwarteschlange in Zusammenhang steht; und
Ausgeben der Zwischenspeicherdaten in der Datenzwischenspeicherwarteschlange, die die Ausgangsarbitrierung gemäß einer voreingestellten Planungsregel und dem Zustand der Datenzwischenspeicherwarteschlange beantragt (S102).

2. Verfahren nach Anspruch 1, wobei das Ausgeben der Zwischenspeicherdaten in der Datenzwischenspeicherwarteschlange, die die Ausgangsarbitrierung gemäß der voreingestellten Planungsregel und dem Zustand der Datenzwischenspeicherwarteschlange beantragt, Folgendes umfasst:
Festlegen einer Planungspriorität für jede Datenzwischenspeicherwarteschlange, wobei jede Datenzwischenspeicherwarteschlange einer anderen Planungspriorität entspricht;
Ausgeben der Zwischenspeicherdaten in der Datenzwischenspeicherwarteschlange, die die Ausgangsarbitrierung gemäß einer Reihenfolge von einer höchsten Planungspriorität zu einer niedrigsten Planungspriorität und dem Zustand der Datenzwischenspeicherwarteschlange beantragt.

3. Verfahren nach Anspruch 2, wobei das Ausgeben der Zwischenspeicherdaten in der Datenzwischenspeicherwarteschlange, die die Ausgangsarbitrierung gemäß der Reihenfolge von der höchsten Planungspriorität zur niedrigsten Planungspriorität und dem Zustand der Datenzwischenspeicherwarteschlange beantragt, Folgendes umfasst:
Schritt A: Erfassen einer Datenzwischenspeicherwarteschlange mit der höchsten Planungspriorität gemäß der Reihenfolge von der höchsten Planungspriorität zur niedrigsten Planungspriorität;
Schritt B: Beurteilen, ob die aktuell erfasste Datenzwischenspeicherwarteschlange eine Ausgangsarbitrierung gemäß dem Zustand der Datenzwischenspeicherwarteschlange beantragt; wenn festgestellt wird, dass die aktuell erfasste Datenzwischenspeicherwarteschlange die Ausgangsarbitrierung beantragt, Ausführen von Schritt C; wenn festgestellt wird, dass die aktuell erfasste Datenzwischenspeicherwarteschlange die Ausgangsarbitrierung nicht beantragt, Ausführen von Schritt D;
Schritt C: Ausgeben der Zwischenspeicherdaten in der aktuellen Datenzwischenspeicherwarteschlange gemäß den Datenadressinformationen, dann Ausführen von Schritt A;
Schritt D: Wenn festgestellt wird, dass die aktuell erfasste Datenzwischenspeicherwarteschlange eine Datenzwischenspeicherwarteschlange mit der niedrigsten Planungspriorität ist, Ausführen von Schritt A; wenn festgestellt wird, dass die aktuell erfasste Datenzwischenspeicherwarteschlange nicht die Datenzwischenspeicherwarteschlange mit der niedrigsten Planungspriorität ist, Erfassen einer Datenzwischenspeicherwarteschlange mit einer Planungspriorität neben der höchsten Planungspriorität gemäß der Reihenfolge von der höchsten Planungspriorität zur niedrigsten Planungspriorität und Ausführen von Schritt B.

4. Verfahren nach Anspruch 3, wobei das Ausgeben der Zwischenspeicherdaten in der aktuellen Datenzwischenspeicherwarteschlange gemäß den Datenadressinformationen umfasst:
wenn die Länge der Zwischenspeicherdaten größer oder gleich der festen Länge ist, Ausgeben der festen Länge der Zwischenspeicherdaten in der Datenzwischenspeicherwarteschlange gemäß den Datenadressinformationen und den voreingestellten Ausgangsinformationen fester Länge;
wenn die Länge der Zwischenspeicherdaten kleiner als die feste Länge ist, die Zwischenspeicherdaten jedoch das EOP enthalten, Ermitteln einer EOP-Adresse der Zwischenspeicherdaten gemäß den Datenadressinformationen und gemäß der EOP-Adresse Ausgeben einer entsprechenden variablen Länge von Zwischenspeicherdaten, deren Länge kleiner als die feste Länge ist.

5. Verfahren nach einem der Ansprüche 1 bis 4, wobei das Speichern des empfangenen Datenstroms in der entsprechenden Datenzwischenspeicherwarteschlange gemäß der Demultiplex-Filterbedingung umfasst:
Ermitteln der Datenzwischenspeicherwarteschlange, die dem Datenstrom entspricht, gemäß der Demultiplex-Filterbedingung;
Erfassen der aktuellen Datenadressinformationen der Datenzwischenspeicherwarteschlange;
Speichern des Datenstroms in der entsprechenden Datenzwischenspeicherwarteschlange gemäß den erfassten Datenadressinformationen.

6. Vorrichtung zum Steuern der Ausgangsarbitrierung, umfassend: eine Dateneinreihungskomponente (301), eine Warteschlangenverwaltungskomponente (302), eine Arbitrierungssteuerkomponente (303) und eine Ausgangsplanungskomponente (304), wobei
die Dateneinreihungskomponente (301) konfiguriert ist, um einen empfangenen Datenstrom in einer entsprechenden Datenzwischenspeicherwarteschlange gemäß einer Demultiplex-Filterbedingung zu speichern;
die Warteschlangenverwaltungskomponente (302) konfiguriert ist, um Datenadressinformationen der entsprechenden Datenzwischenspeicherwarteschlange zu aktualisieren;
die Arbitrierungssteuerkomponente (303) konfiguriert ist, um die Datenzwischenspeicherwarteschlange zu steuern, um die Ausgangsarbitrierung zu beantragen und einen Zustand der Datenzwischenspeicherwarteschlange zu aktualisieren, der mit der Länge der Datenzwischenspeicherwarteschlange in Zusammenhang steht, wenn festgestellt wird, dass eine Länge von Zwischenspeicherdaten in der Datenzwischenspeicherwarteschlange größer oder gleich einer festen Länge ist, oder wenn festgestellt wird, dass die Zwischenspeicherdaten ein Paketende, EOP, enthalten; und
die Ausgangsplanungskomponente (304) konfiguriert ist, um die Zwischenspeicherdaten in der Datenzwischenspeicherwarteschlange auszugeben, die die Ausgangsarbitrierung gemäß einer voreingestellten Planungsregel und dem Zustand der Datenzwischenspeicherwarteschlange beantragt.

7. Vorrichtung nach Anspruch 6, wobei die Ausgangsplanungskomponente (304) konfiguriert ist, um:
eine Planungspriorität für jede Datenzwischenspeicherwarteschlange festzulegen, wobei jede Datenzwischenspeicherwarteschlange einer anderen Planungspriorität entspricht;
die Zwischenspeicherdaten in der Datenzwischenspeicherwarteschlange auszugeben, die die Ausgangsarbitrierung gemäß einer Reihenfolge von einer höchsten Planungspriorität zu einer niedrigsten Planungspriorität und dem Zustand der Datenzwischenspeicherwarteschlange beantragt.

8. Vorrichtung nach Anspruch 7, wobei die Ausgangsplanungskomponente (304) konfiguriert ist, um:
Schritt A: eine Datenzwischenspeicherwarteschlange mit der höchsten Planungspriorität gemäß der Reihenfolge von der höchsten Planungspriorität zur niedrigsten Planungspriorität zu erfassen;
Schritt B: zu beurteilen, ob die aktuell erfasste Datenzwischenspeicherwarteschlange eine Ausgangsarbitrierung gemäß dem Zustand der Datenzwischenspeicherwarteschlange beantragt; Schritt C auszuführen, wenn festgestellt wird, dass die aktuell erfasste Datenzwischenspeicherwarteschlange die Ausgangsarbitrierung beantragt; Schritt D auszuführen, wenn festgestellt wird, dass die aktuell erfasste Datenzwischenspeicherwarteschlange die Ausgangsarbitrierung nicht beantragt;
Schritt C: die Zwischenspeicherdaten in der aktuellen Datenzwischenspeicherwarteschlange gemäß den Datenadressinformationen ausgeben, dann Schritt A auszuführen;
Schritt D: Schritt A auszuführen, wenn festgestellt wird, dass die aktuell erfasste Datenzwischenspeicherwarteschlange eine Datenzwischenspeicherwarteschlange mit der niedrigsten Planungspriorität ist; eine Datenzwischenspeicherwarteschlange mit einer Planungspriorität neben der höchsten Planungspriorität in der Reihenfolge von der höchsten Planungspriorität zur niedrigsten Planen der Priorität zu erfassen und Schritt B auszuführen, wenn festgestellt wird, dass die aktuell erfasste Datenzwischenspeicherwarteschlange nicht die Datenzwischenspeicherwarteschlange mit der niedrigsten Planungspriorität ist.

9. Vorrichtung nach Anspruch 8, wobei die Ausgangsplanungskomponente (304) konfiguriert ist, um:
die feste Länge der Zwischenspeicherdaten in der Datenzwischenspeicherwarteschlange gemäß den Datenadressinformationen und den voreingestellten Ausgangsinformationen fester Länge auszugeben, wenn die Länge der Zwischenspeicherdaten größer oder gleich der festen Länge ist;
eine EOP-Adresse der Zwischenspeicherdaten gemäß der Datenadressinformation zu ermitteln und gemäß der EOP-Adresse eine entsprechende variable Länge von Zwischenspeicherdaten auszugeben, deren Länge kleiner als die feste Länge ist, wenn die Länge der Zwischenspeicherdaten kleiner als die feste Länge ist, die Zwischenspeicherdaten jedoch das EOP enthalten.

10. Vorrichtung nach einem der Ansprüche 6 bis 9, wobei die Datenreihungskomponente (301) konfiguriert ist, um:
die Datenzwischenspeicherwarteschlange, die dem Datenstrom entspricht, gemäß der Demultiplex-Filterbedingung zu ermitteln;
die aktuellen Datenadressinformationen der Datenzwischenspeicherwarteschlange zu erfassen; den Datenstrom in der entsprechenden Datenzwischenspeicherwarteschlange gemäß den erfassten Datenadressinformationen zu speichern.

## Revendications

1. Procédé de commande d'arbitrage de sortie, comprenant :
le stockage d'un flux de données reçu dans une file d'attente correspondante de cache de données, conformément à une condition de filtre de démultiplexage et la mise à jour des informations d'adresse de données de la file d'attente correspondante de cache de données (S100) ;
lorsqu'il est déterminé qu'une longueur de données de cache de la file d'attente de cache de données est supérieure ou égale à une longueur fixe ou lorsqu'il est déterminé que la longueur des données de cache est inférieure à la longueur fixe mais que les données de cache contiennent une Fin de Paquet, EOP, la régulation de la file d'attente de cache de données pour demander l'arbitrage de sortie et la mise à jour d'un état de la file d'attente de cache de données (S101), qui est lié à la longueur de la file d'attente de cache de données ; et
la sortie des données de cache dans la file d'attente de cache de données qui demandent l'arbitrage de sortie, conformément à une règle de planification prédéfinie et à l'état de la file d'attente de cache de données (S 102).

2. Procédé selon la revendication 1, dans lequel la sortie des données de cache de la file d'attente de cache de données qui demandent l'arbitrage de sortie conformément à la règle de planification prédéfinie et à l'état de la file d'attente de cache de données comprend :
la définition d'une priorité de planification pour chaque file d'attente de cache de données, chaque file d'attente de cache de données correspondant à une priorité différente de planification ;
la sortie des données de cache dans la file d'attente de cache de données qui demandent l'arbitrage de sortie selon un ordre allant d'une priorité de planification la plus élevée à une priorité de planification la plus basse et à l'état de la file d'attente de cache de données.

3. Procédé selon la revendication 2, dans lequel la sortie des données de cache dans la file d'attente de cache de données qui demandent l'arbitrage de sortie selon l'ordre allant de la priorité de planification la plus élevée à la priorité de planification la plus basse et l'état de la file d'attente de cache de données comprend :
Étape A : l'acquisition d'une file d'attente de cache de données avec la priorité de planification la plus élevée, en fonction de l'ordre allant de la priorité de planification la plus élevée à la priorité de planification la plus basse ;
Étape B : la détermination de savoir si la file d'attente de cache de données actuellement acquise demande l'arbitrage de sortie en fonction de l'état de la file d'attente de cache de données ; lorsqu'il est déterminé que la file d'attente de cache de données actuellement acquise demande l'arbitrage de sortie, exécution de l'étape C ; lorsqu'il est déterminé que la file d'attente de cache de données actuellement acquise ne demande pas l'arbitrage de sortie, exécution de l'étape D ;
Étape C : la sortie des données de cache dans la file d'attente de cache de données actuelle en fonction des informations d'adresse de données, puis l'exécution de l'étape A ;
Étape D : lorsqu'il est déterminé que la file d'attente de cache de données actuellement acquise est une file d'attente de cache de données dont la priorité de planification est la plus basse, exécution de l'étape A ; lorsqu'il est déterminé que la file d'attente de cache de données acquise actuellement n'est pas la file d'attente de cache de données dont la priorité de planification est la plus basse, acquisition d'une file d'attente de cache de données dont la priorité de planification est proche de la priorité de planification la plus élevée, en fonction de l'ordre allant de la priorité de planification la plus élevée à la priorité de planification la plus basse et exécution de l'étape B.

4. Procédé selon la revendication 3, dans lequel la sortie des données de cache dans la file d'attente de cache de données actuelles en fonction des informations d'adresse de données consiste à :
lorsque la longueur des données de cache est supérieure ou égale à la longueur fixe, sortie la longueur fixe des données de cache dans la file d'attente de cache de données, en fonction des informations d'adresse de données et des informations prédéfinies de sortie de longueur fixe ;
lorsque la longueur des données de cache est inférieure à la longueur fixée mais que les données de cache contiennent l'EOP, déterminer une adresse EOP des données de cache en fonction des informations d'adresse de données et sortir, en fonction de l'adresse EOP, une longueur variable correspondante des données de cache dont la longueur est inférieure à la longueur fixe.

5. Procédé selon l'une quelconque des revendications 1 à 4, dans lequel le stockage du flux de données reçu dans la file d'attente de cache de données correspondante en fonction de la condition de filtre de démultiplexage consiste à :
déterminer la file d'attente de cache de données correspondant au flux de données en fonction de la condition de filtre de démultiplexage ;
acquérir les informations d'adresse de données actuelles de la file d'attente de cache de données ;
stocker le flux de données dans la file d'attente de cache de données correspondante, en fonction des informations d'adresse de données acquises.

6. Dispositif de commande d'arbitrage de sortie, comprenant : un composant de mise en file d'attente de données (301), un composant de gestion de file d'attente (302), un composant de commande d'arbitrage (303) et un composant de planification de sortie (304), dans lequel
le composant de mise en file d'attente de données (301) est configuré pour stocker un flux de données reçu dans une file d'attente de cache de données correspondante, conformément à une condition de filtre de démultiplexage;
le composant de gestion de file d'attente (302) est configuré pour mettre à jour des informations d'adresse de données de la file d'attente correspondante de cache de données ;
le composant de commande d'arbitrage (303) est configuré pour commander la file d'attente de cache de données, afin qu'elle demande l'arbitrage de sortie et pour mettre à jour un état de la file d'attente de cache de données, qui est lié à la longueur de la file d'attente de cache de données, lorsqu'il est déterminé qu'une longueur de données de cache dans la file d'attente de cache de données est supérieur ou égale à une longueur fixe ou qu'il est déterminé que les données de cache contiennent une fin de paquet, EOP ; et
le composant de planification de sortie (304) est configuré pour sortir les données de cache dans la file d'attente de cache de données qui demandent l'arbitrage de transmission, conformément à une règle de planification préétablie et à l'état de la file d'attente de cache de données.

7. Dispositif selon la revendication 6, le composant de planification de sortie (304) étant conçu pour :
définir une priorité de planification pour chaque file d'attente de cache de données, chaque file d'attente de cache de données correspondant à une priorité différente de planification ;
sortir les données de cache dans la file d'attente de cache de données qui demandent l'arbitrage de sortie selon un ordre allant d'une priorité de planification la plus élevée à une priorité de planification la plus basse et l'état de la file d'attente de cache de données.

8. Dispositif selon la revendication 7, le composant de planification de sortie (304) étant conçu pour :
Étape A : acquérir une file d'attente de cache de données de priorité de planification la plus élevée en fonction de l'ordre, de la priorité de planification la plus élevée à la priorité de planification la plus basse ;
Étape B : déterminer si la file d'attente de cache de données actuellement acquise demande l'arbitrage de sortie en fonction de l'état de la file d'attente de cache de données ; lorsqu'il est déterminé que la file d'attente de cache de données actuellement acquise demande l'arbitrage de transmission, exécuter l'étape C ; lorsqu'il est déterminé que la file d'attente de cache de données actuellement acquise ne demande pas l'arbitrage de sortie, exécuter l'étape D ;
Étape C : sortir les données de cache dans la file d'attente de cache de données actuelle en fonction des informations d'adresse, puis exécuter l'étape A ;
Étape D : lorsqu'il est déterminé que la file d'attente de cache de données actuellement acquise est une file d'attente de cache de données ayant la priorité de planification la plus basse, exécuter l'étape A ; lorsqu'il est déterminé que la file d'attente de cache de données acquise actuellement n'est pas la file d'attente de cache de données ayant la priorité de planification la plus basse, acquérir une file d'attente de cache de données avec une priorité de planification proche de la priorité de planification la plus élevée, en fonction de l'ordre allant de la priorité de planification la plus élevée à priorité de planification la plus basse et exécuter l'étape B.

9. Dispositif selon la revendication 8, le composant de planification de sortie (304) étant conçu pour :
lorsque la longueur des données de cache est supérieure ou égale à la longueur fixe, sortir la longueur fixe des données de cache dans la file d'attente de cache de données en fonction des informations d'adresse de données et des informations de sortie de longueur fixe prédéfinies ;
lorsque la longueur des données de cache est inférieure à la longueur fixe mais que les données de cache contiennent l'EOP, déterminer une adresse EOP des données de cache en fonction des informations d'adresse de données et sortir, en fonction de l'adresse d'EOP, une longueur variable correspondante des données de cache dont la longueur est inférieure à la longueur fixe.

10. Dispositif selon l'une quelconque des revendications 6 à 9, dans lequel le composant de mise en file d'attente de données (301) est configuré pour :
déterminer la file d'attente de cache de données correspondant au flux de données en fonction de la condition de filtre de démultiplexage ;
acquérir les informations d'adresse de données actuelles de la file d'attente de cache de données ; stocker le flux de données dans la file d'attente de cache de données correspondante, en fonction des informations d'adresse de données acquises.
